# EUROPEAN PATENT APPLICATION

(11) **EP 4 787 017 A1**
(43) Date of publication of application: **05.08.2026**
(21) Application number: 25155648.6
(22) Date of filing: 03.02.2025
(51) Int. Cl.: G01S 13/76, G01S 13/87

(54) **AN APPARATUS FOR ULTRA WIDEBAND RANGING**

(71) Applicant: NXP B.V., 5656 AG Eindhoven (NL)
(72) Inventor: GUSTIN, Matjaz, 5656 AG Eindhoven (NL); SARACEVIC, Omar, 5656 AG Eindhoven (NL); COSTANTINI, Valerio, 5656 AG Eindhoven (NL)
(74) Representative: Krott, Michel

(57) **Abstract**

An apparatus comprising:
an ultra-wideband device comprising a transmitter and a receiver; one or more processors configured to control the transmitter and receiver to perform a UWB ranging round with a remote UWB device, the UWB ranging round comprising the receipt of one or more ranging frames and the transmission of one or more responses for determination of a ranging-based distance, wherein the processors are further configured to provide for transmission of one or more radar frames during the UWB ranging round and, based on a corresponding one or more received reflections of the one or more radar frames, determine one or more radar-based distances between the UWB device and the remote UWB device, wherein the processors are configured to verify the ranging-based distance by determining whether or not the one or more radar-based distances contravene a predetermined minimum-possible-distance or a predetermined maximum-possible-distance.

## Description

### Field

The present disclosure relates to an apparatus for ultra-wideband ranging and, in particular, an apparatus configured to verify a distance determined by an ultra-wideband ranging round using distances determined based on transmission of ultra-wideband radar frames. In some aspects, the apparatus is configured to detect physical manipulations of the reference clock frequency, affecting the ultra-wideband ranging results. It also relates to an associated method.

### Background

Ultra-Wideband, UWB, devices may support ranging (distance measurements) with accuracy and security against relay attacks. However, security can be a challenge.

### Summary

According to a first aspect of the present disclosure there is provided an apparatus comprising:
at least one ultra-wideband, UWB, device comprising a transmitter for transmitting ultra-wideband, UWB, frames and a receiver;
one or more processors configured to control the transmitter and receiver of the at least one UWB device to perform a UWB ranging round with a remote UWB device, the UWB ranging round comprising the receipt of one or more ranging frames and the transmission of one or more responses for determination of a ranging-based distance between the apparatus and the remote UWB device, wherein the one or more processors are further configured to provide for transmission of one or more radar frames during the UWB ranging round and, based on a corresponding one or more received reflections of the one or more radar frames, determine one or more radar-based distances between the at least one UWB device and the remote UWB device,
wherein the one or more processors are configured to verify the ranging-based distance by determining whether or not the one or more radar-based distances contravene one or both of a predetermined minimum-possible-distance or a predetermined maximum-possible-distance associated with the at least one UWB device.

In one or more embodiments, the one or more processors are configured to:
based on the ranging-based distance being verified, activate ranging-based distance activated functionality; and
based on the ranging-based distance not being verified, prevent the ranging-based distance activated functionality from being activated.

In one or more embodiments,
(a) said one or more processors are configured to control the transmitter of the one or more UWB devices to provide for transmission of the one or more radar frames; or
(b) said one or more processors are configured to control the remote UWB device to provide for transmission of the one or more radar frames.

In one or more examples, the ranging-based distance activated functionality comprises one of:
the control of a lock on a vehicle or premises; or
the control of a home-automation system; or
the control of a vehicle-to-X system; or
the control of a payment system.

In one or more embodiments, the one or more UWB devices are configured to limit the transmission range of the one or more radar frames transmitted during the UWB ranging round relative to a transmission range used for the UWB ranging round.

In some examples, the transmission range may be limited by providing for transmission with lower power.

In one or more embodiments, the one or more processors are configured to control the transmitter and receiver of the at least one UWB device to perform the UWB ranging round with the remote UWB device, by
(a) in response to receipt of one or more ranging frames from the remote UWB device, provide for transmission by the transmitter of the at least one UWB device, to the remote UWB device, of the one or more responses for determination of the ranging-based distance between the apparatus and the remote UWB device; or
(b) provide for transmission of one or more ranging frames to the remote UWB device and provide for processing of the one or more responses from the remote UWB device for determination of the ranging-based distance between the apparatus and the remote UWB device.

In one or more embodiments, the UWB ranging round comprises a plurality of ranging frames and the one or more UWB devices are configured to transmit the one or more radar frames in between at least two of the plurality ranging frames.

In one or more embodiments, said one or more processors are configured such that each of the at least one UWB devices is configured to determine a respective ranging distance to the remote UWB device, and determine a respective radar-based distance, and wherein each of the at least one UWB devices are configured to verify their respective ranging-based distance by determining whether or not their one or more respective radar-based distances contravene one or both of the predetermined minimum-possible-distance or the predetermined maximum-possible-distance associated with the respective at least one UWB device.

In one or more embodiments, the at least one UWB device comprises at least a first UWB device configured to be located at a first location and a second UWB device configured to be located at a different, second location, and
the one or more processors are configured to control the transmitter and receiver of the first and second UWB devices to each perform a UWB ranging round, the UWB ranging rounds comprising the receipt of one or more ranging frames from the remote UWB device and the transmission of one or more responses to the remote UWB device for determination of a respective ranging-based distance between the respective first and second UWB devices and the remote UWB device, wherein the one or more processors are further configured to control the transmitter of each of the first and second UWB devices to determine at least one or both of a first radar-based distance from the first UWB device to the remote UWB device and a second radar-based distance from the second UWB device to the remote UWB device,
wherein the one or more processors are configured to verify the respective ranging-based distances by determining whether or not one or both of:
   the first radar-based distance contravenes one or both of a first predetermined minimum-possible-distance or a first predetermined maximum-possible distance associated with the first UWB device; or
   the second radar-based distance contravenes one or both of a second predetermined minimum-possible-distance or a second predetermined maximum-possible distance associated with the second UWB device.

In one or more embodiments, one or more of:
the radar frames are transmitted on a different channel to the ranging frames;
the radar frames are transmitted using a different antenna to the ranging frames;
the radar frames are transmitted using different codes to the ranging frames; or
the radar frames are transmitted using different guard time intervals to the ranging frames.

In one or more embodiments, the determination of the one or more radar-based distance to the remote UWB device comprises the determination of at least two radar-based distances and wherein the one or more processors are configured to determine a speed of the remote UWB device based on a change in the at least two radar-based distances and a time between when the or each two radar-based distances were determined, and
wherein the one or more processors being configured to verify the ranging-based distance is further based on the determined speed of the remote UWB device relative to a predetermined maximum-permissible-speed.

In one or more embodiments, the determination of the one or more radar-based distances to the remote UWB device comprises the determination of at least three radar-based distances and wherein the one or more processors are configured to determine an acceleration of the remote UWB device based on the at least three radar-based distances and times between when they were determined, and
wherein the one or more processors being configured to verify the ranging-based distance is further based on the determined acceleration of the remote UWB device relative to a predetermined maximum-permissible-acceleration.

In one or more embodiments, the one or more processors being configured to verify the ranging-based distance is further based on a received power of the received reflections of the one or more radar frames relative to a predetermined maximum-expected-signal-power.

In one or more embodiments, the one or more processors are configured to verify the radar-based distance based on a received power of the received reflections of the one or more radar frames relative to a predetermined maximum-expected-signal-power.

In one or more embodiments, the one or more processors being configured to verify the ranging-based distance is further based on a channel impulse response, CIR, determined from the received reflections of the one or more radar frames relative to a predetermined expected-CIR.

According to a second aspect of the disclosure we provide a method of controlling an apparatus comprising at least one UWB device comprising a transmitter for transmitting ultra-wideband, UWB, frames and a receiver, the method comprising:
controlling the transmitter and receiver of the at least one UWB device to perform a UWB ranging round with a remote UWB device, the UWB ranging round comprising the receipt of one or more ranging frames and the transmission of one or more responses;
determining a ranging-based distance between the apparatus and the remote UWB device based on the UWB ranging round,
providing for transmission of one or more radar frames during the UWB ranging round and,
determining one or more radar-based distances between the at least one UWB device and the remote UWB device based on a corresponding one or more received reflections of the one or more radar frames,
verifying the ranging-based distance by determining whether or not the one or more radar-based distances contravene one or both of a predetermined minimum-possible-distance or a predetermined maximum-possible-distance associated with the at least one UWB device.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example apparatus to illustrate UWB secure ranging;
Figure 2 illustrates a standard UWB ranging round;
Figure 3 illustrates an example UWB ranging round of the disclosure;
Figure 4 illustrates a further example UWB ranging round of the disclosure; and
Figure 5 illustrates an example method.

### Detailed Description

Ultra-Wideband, UWB, devices may use secure ranging solutions for wireless access or activation of functionality based on proximity. For example, UWB devices may be used as part of a system for secure access to vehicle or building wherein a door will be unlocked or functionality activated if a distance between particular UWB devices is below a threshold. However, UWB devices providing secure ranging are susceptible to not only radio attacks but also physical attacks, where an attacker might try to alter their printed circuit board (PCB) components, affect their temperature, inject electromagnetic faults, glitch their power supply etc. UWB devices that provide secure ranging are typically designed for a partially hostile environment, as they are somewhat exposed to physical security attacks, e.g. behind a vehicle's bumper.

UWB devices may determine their proximity to another or "remote" UWB device by a UWB ranging round, which is a process in which time-of-flight measurements of a ranging frame exchange between the UWB devices is calculated. A UWB device may be coupled with a crystal oscillator, which may be external to the UWB device, wherein the crystal oscillator provides a reference clock for use in UWB ranging. The crystal oscillator may be external to the integrated circuit (IC) on which the UWB device is provided. In particular, said external oscillator provides the time reference for the computation of the time-of-flight of messages exchanged between UWB ranging devices and consequently the distances between them. The crystal oscillator may be external to the IC because its specific and strict clock frequency accuracy and precision requirements make it hard to integrate into the IC along with the UWB device circuitry.

As the oscillator is external to the IC, it is easy to physically reach, e.g. with a probe of an oscilloscope or signal generator. UWB secure ranging may be thus open to a physical attack based on manipulation of the operating clock frequency of the external oscillator, which would in turn adjust the time-of-flight measurements and, therefore, the calculated proximity. A spoofed proximity estimation finally allows the attacker to maliciously trigger a proximity-based system output (e.g. unlocking a door) when the UWB ranging systems are not really in proximity.

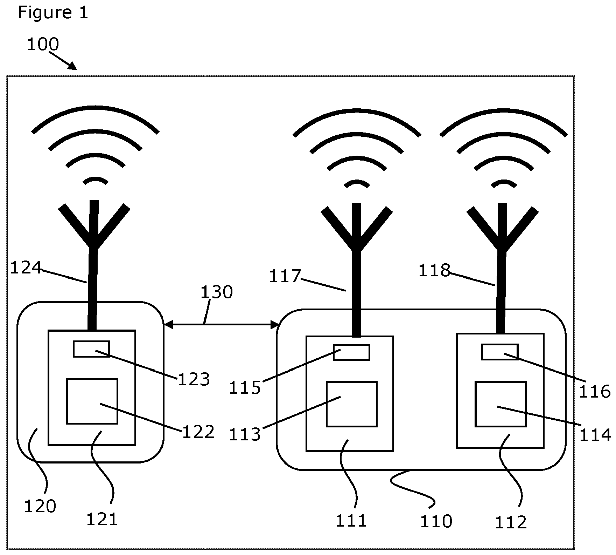

Figure 1 shows an example system 100 for UWB ranging. The system includes a first apparatus 110 including two UWB devices, although one UWB device or more than two UWB devices may be provided in other examples. The UWB device(s) may be provided for positioning at different locations in a vehicle, for example.

In this example, the apparatus 100 comprises a first UWB device 111. The first UWB device 111 comprises or controls a transmitter for transmitting UWB frames and a receiver for receiving signals including the transmitted UWB frames from the environment, such as transmitted from either the first or second UWB device. The first UWB device may have an associated antenna 117. Likewise, the apparatus 100 comprises a second UWB device comprising or configured to control a transmitter for transmitting UWB frames and a receiver for receiving signals including the transmitted UWB frames from the environment, such as transmitted from either the first or second UWB device. The second UWB device 112 may have an associated antenna 118. The first UWB device 111 and the second UWB device 112 may be located at different positions on a vehicle or building or other entity to which they are applied.

The apparatus 100 further comprises one or more processors 113, 114 configured to control the transmitter and receiver of the first and second UWB devices 111, 112. It will be appreciated that the one or more processors may comprise a processor of the at least one UWB device. In some examples, there may be provided a processor per UWB device 111, 112. In other examples, there may be one or more central processors providing control for the UWB devices 111, 112. Many processor arrangements are possible. In the present example, the apparatus 100 includes a memory (not shown) for storing computer program code to be executed by the one or more processors for performing the operations described herein and/or storing predetermined values for use in the operations described. Further, the first UWB device 111 is shown with its associated clock 115 (which is typically external to the UWB device) which it uses at least to determine time-of-flight measurements made as part of a ranging round. Further, the second UWB device includes a clock 116 which it uses at least to determine time-of-flight measurements made as part of a ranging round.

Figure 1 also shows a remote UWB device 121, which may be part of a remote apparatus 120. It will be appreciated that the remote UWB apparatus 120 may comprise more than one UWB device. The remote UWB device 121 may also have a transmitter and receiver and associated circuitry and/or processor for engaging in the ranging round. In the description that follows an attacker may be attempting to modify the determined distance 130 between each of first and second UWB devices 111, 112 and the UWB device 121 by taking steps to manipulate the crystal oscillators or clocks 115 and/or 116 or the reference clock signal generated thereby.

Figure 1 shows an example implementation 100 of UWB secure ranging. The figure shows an apparatus 110 comprising two UWB devices 111, 112. However, the apparatus may include one or more UWB devices. Figure 1 also shows a remote apparatus 120 or, more particularly, a remote UWB device 121.

The apparatus 110 and remote UWB device 121 are configured for engaging in one or more ranging rounds to determine a distance 130 between each of the UWB devices 111, 112 and 121 and/or their associated apparatuses 110, 120.

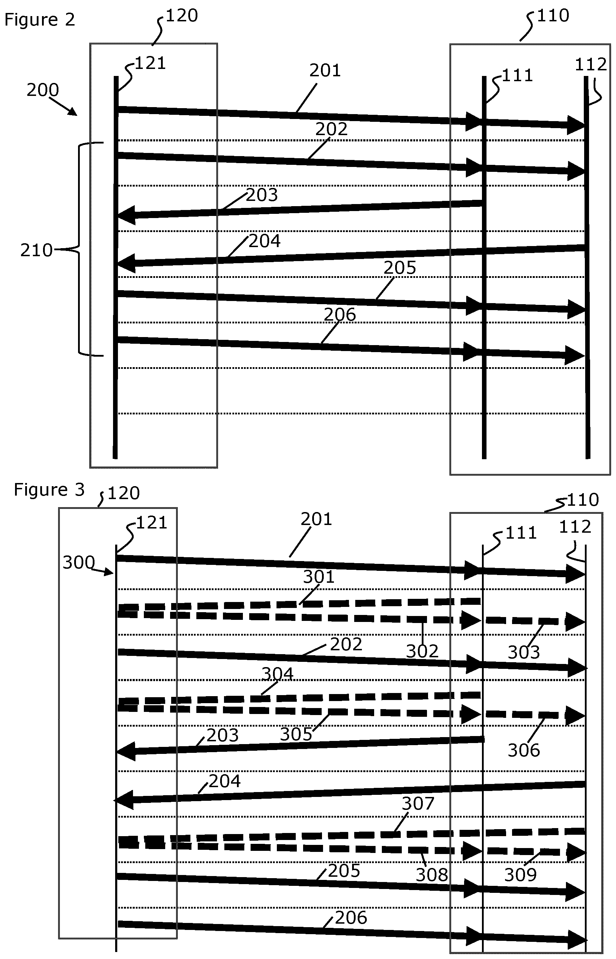

Figure 2 shows a standard UWB ranging round 200 between the apparatus 110, comprising the first UWB device 111 and the second UWB device 112, and the remote UWB device 121. The UWB ranging round 210 shown in Figure 2 may be that as defined by the Car Connectivity Consortium Digital Key release 3 (CCC DK R3) standard. Figure 2 shows the exchange of ranging frames 201, 202, 203, 204, 205, 206 shown as arrows between the apparatus 110 comprising the UWB devices 111, 112 and the respective remote UWB device 121.

The ranging round shows the sending of a Pre-Poll-type ranging frame 201 from the remote UWB device 121, although in other examples, any UWB ranging system or UWB device may initiate the ranging round. The Pre-Poll-type ranging frame 201 is received by the UWB devices 111, 112 and, as such, the UWB devices 111, 112, 121 are all informed of the start of the ranging round. The ranging round initiator, in this example being the remote UWB device 121, then sends a first Poll-type ranging frame 202 for receipt by both the first UWB device 111 and the second UWB device 112. The first UWB device 111 is configured to reply with a first Response-type ranging frame 203. The second UWB device 112 is configured to reply with a first response-type ranging frame 204. It will be appreciated that more than two UWB devices can be included in the UWB ranging system 110 and configured to reply with a first Response-type ranging frame analogous to 203, 204. The UWB device 121 sends a Final-type ranging frame 205 and a Final-Data-type ranging frame 206, each for receipt by both the first UWB device 111 and the second UWB device 112 and any other UWB device of the apparatus 110. As will be known to those skilled in the art, from the content and timing between the transmission of the ranging frames, in particular 202, 203, 204, and 205, the ranging round described may be used to compute a ranging-based distance pairwise between the UWB devices 111-121 and 112-121. The ranging-based distances are determined by one or both (or some or all, if there are more UWB devices) of the one or more UWB devices 111, 112 of the apparatus 110. From these pairwise distances between UWB devices, a distance 130 between the apparatus 110 and the remote apparatus 120 may be determined.

However, manipulation of the reference clock 115 and/or reference clock 116 associated with the first UWB device 111 and the second UWB device 112 between the ranging frames 202 and 205 may cause the one or more processors to determine a false distance between the remote UWB device 121 and one or both of the first UWB device 111 and the second UWB device 112.

Further, such manipulation may cause the determination of a false distance between the apparatus 110 and remote apparatus 120.

Figure 3 illustrates the advantageous use of radar frames in addition to ranging frames by the UWB devices 111, 112 of the apparatus 110. It will be appreciated that while the ranging frames may be used to determine distance by their exchange between active UWB devices and determination of the time of flight of said ranging frames, the radar frames may be used to determine distances to a passive object or party without a response frame actively transmitted from the said object or party. In many instances, the distance activated functionality that the apparatus 110 controls access to, requires the distance between the UWB devices 111, 112 and the remote UWB device 121 or between the apparatuses 110, 120 to be less than a predefined threshold. Thus, the use of radar frames to verify that there is indeed an object (e.g. a person holding the remote apparatus 120 in the form of a key fob or smartphone) within an expected or reasonable distance from the apparatus 110 may improve security of the UWB secure ranging.

Figure 3 shows a series of time-slots 300 (one labelled) in which the ranging frames are being transmitted as well as radar frames. In the example, the ranging round frames 201, 202, 203, 204, 204, 205, 206 may be the same as in Figure 2.

Thus, the one or more processors 113, 114 are configured to control the transmitter and receiver of each of the UWB devices 111, 112 and any other UWB device of the apparatus 110 to perform a UWB ranging round, which may be initiated by the Pre-Poll frame 201 by either the UWB devices comprising the apparatus 110 or the UWB devices comprising the remote apparatus 120 (in some embodiments more common).

The UWB ranging round, as explained with reference to Figure 2, comprises the receipt of one or more ranging frames 202, 205 from the remote UWB device 121 and the transmission of one or more response ranging frames 203, 204 (i.e. one from each of the UWB devices 111, 112 in the present example) to the remote UWB device 121. The one or more processors 113, 114, using known techniques can determine a ranging-based distance (so called as determined by a ranging session) between the apparatus 110 and remote apparatus 120, and in particular each of the UWB devices 111, 112, and the remote UWB device 121.

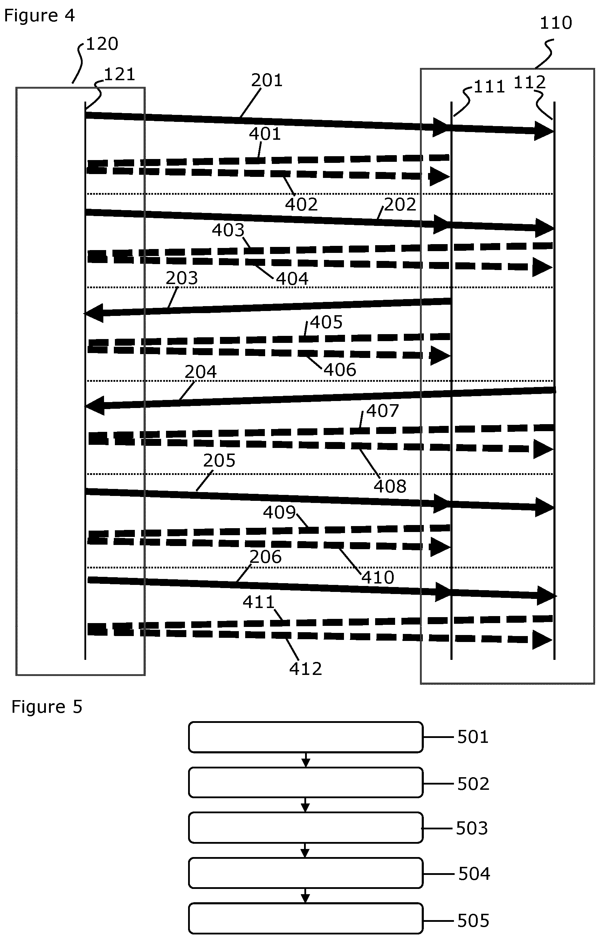

In the present disclosure, the one or more processors 113, 114 are further configured to control one or more of the UWB device 111 and the UWB device 112 to transmit one or more radar frames during the UWB ranging round. In this example in Figure 3, three radar frames are transmitted in dedicated slots between slots 300 of the ranging round. In the example in Figure 4 the radar frames are instead transmitted in extended sized slots.

In particular, the first UWB device 111 is caused to transmit a first radar frame 301. A reflection of the first radar frame, such as from the remote apparatus 120 or person or object holding it, is received by the UWB device 111 show by arrow 302 and the second UWB device 112 shown by arrow 303. Further, the first UWB device 111 is caused to transmit a second radar frame 304. A reflection of the second radar frame, such as from the remote apparatus 120 or person holding it, is received by the first UWB device 111 shown by arrow 305 and the second UWB device 112 shown by arrow 306. Further, the second UWB device 112 is caused to transmit a third radar frame 307. A reflection of the third radar frame, such as from the remote apparatus 120 or person holding it, is received by the first UWB device 111 shown by arrow 308 and the second UWB device 112 shown by arrow 309.

The one or more processors 113, 114, based on the received reflections 302, 303, 305, 306, 308, 309 of the radar frames 301, 304, 307, are configured to determine one or more, such as three in this example, radar-based distances between the apparatus 110 and the remote UWB device 120. It will be appreciated that the distance is "radar-based" because it is determined from radar frames. Likewise, the ranging-based distance is determined based on ranging frames. Furthermore, those skilled in the art will recognize that both the ranging and radar measurements may be determined from the time-of-flight measurements based on the same reference clock 115, 116. Thus, a manipulation to tamper with the ranging measurement will affect also the radar measurement and vice-versa.

It will be appreciated that any radar frame during a ranging round might be transmitted by any of the UWB devices 111, 112. It will also be appreciated that more than one UWB device 111, 112 might transmit any radar frame simultaneously, typically using distinct radio configurations (e.g. frequencies, codes) for each transmitting UWB device.

It will be appreciated that radar frames reflections might be received by any of UWB devices 111, 112, not necessarily by the UWB device which transmitted said radar frame. It will also be appreciated that more than one UWB device 111, 112 might receive any radar frame reflection simultaneously (so-called multistatic radar), not necessarily only the UWB device which transmitted said radar frame.

It will be appreciated that there may be zero, one, or more radar frames before or after each ranging frame in each ranging round, depending on configuration, and that each ranging round might use a different configuration. The depiction in Figure 3 shows one radar frame at each step for simplicity.

Figure 4 illustrates a further example. In the example, the ranging round frames 201, 202, 203, 204, 204, 205, 206 are the same as in Figure 2. In this example, each radar frame reflection is being received only by the UWB device that transmitted said radar frame (so-called monostatic radar). It will be appreciated that monostatic and multistatic radar are just different and equally valid embodiments of how the radar frames might be transmitted and received by one or more UWB devices.

Thus, one or more of the following radar frames may be provided:
a first radar frame 401 from the first UWB device 111 wherein the reflection 402 is for receipt by (e.g. only or at least) the first UWB device 111 subsequent the Pre-Poll-type ranging frame 201 and before the Poll-type ranging frame 202;
a second radar frame 403 from the second UWB device 112 wherein the reflection 404 is for receipt by (e.g. only or at least) the second UWB device 112 subsequent the Poll-type ranging frame 202 and before the first Response-type ranging frame 203;
a third radar frame 405 from the first UWB device 111 wherein the reflection 406 is for receipt by (e.g. only or at least) the first UWB device 111 subsequent the first Response-type ranging frame 203 and before the second Response-type ranging frame 204;
a fourth radar frame 407 from the second UWB device 112 wherein the reflection 408 is for receipt by (e.g. only or at least) the second UWB device 112 subsequent the second Response-type ranging frame 204 and before the Final-type ranging frame 205;
a fifth radar frame 409 from the first UWB device 111 wherein the reflection 410 is for receipt by (e.g. only or at least) the first UWB device 111 subsequent the Final-type ranging frame 205 and before the Final-Data-type ranging frame 206; and/or
a sixth radar frame 411 from the second UWB device 112 wherein the reflection 412 is for receipt by (e.g. only or at least) the second UWB device 112 subsequent the Final-Data-type ranging frame 206.

It will be appreciated that, in other examples, in the list above, any reference to the first UWB device 111 may be swapped with the second UWB device 112 and vice versa. Additionally, further UWB devices may be involved. Any reference to first UWB device and second UWB device is considered exemplificative of the embodiment, but an application of the present disclosure can scale to any number of UWB devices.

It will be appreciated that there may be zero, one, or more radar frames before or after each ranging frame in each ranging round, depending on configuration, and that each ranging round might use a different configuration. The depiction in Figure 4 shows one radar frame at each step for simplicity.

However, in general, it will be appreciated that the one or more radar frames are transmitted in between at least two of the plurality ranging frames 202-205 or directly before or directly after the Poll-type and Final-type ranging frames 202, 205 (i.e. within a predetermined time just before or after).

Regarding the radar slots 300, the slots may be of a size that the radar frames and reflections may be present in the same slot as a ranging frame. Such configuration would allow a certain degree of backwards compatibility with existing ranging round standards, where radar frames could be squeezed in (longer) delays between successive ranging frames. In other examples, the ranging round may be adapted to include additional dedicated slots for just radar frames between the slots used for just ranging frames. Such configuration would allow higher configurability for the dedicated use-case, with a potential loss of backwards-compatibility with existing ranging round standards.

In some embodiments, the radar frames are transmitted on a different channel to the ranging frames and/or different codes can be used to reduce interference.

In some examples, while multiple radar frames may be transmitted, the one or more processors may be configured not to verify the ranging-based distance based on only one of the radar-based distances that are determined being less than the minimum-possible-distance and/or greater than the maximum-possible-distance. In other examples, more than one radar-based distance may need to be "unexpected" relative to the minimum-possible distance/maximum-possible-distance.

The UWB ranging system 110 may have defined one or both of a predetermined minimum-possible-distance and/or a predetermined maximum-possible distance associated with each of the UWB devices 111, 112.

A minimum-possible-distance (e.g. 5 cm or less) may be predefined or set during a set-up procedure. More generally, the predetermined minimum-possible-distance may be based on a distance between the UWB device and a housing that surrounds the at least one UWB device. However, the user is free to set the predetermined minimum-possible-distance based on the application. Malicious manipulation of one or more reference clocks 115, 116 frequencies with the malicious intent to manipulate ranging-based distances (typically reduce them) may cause the one or more UWB devices 111, 112, based on the each of the radar frames and their corresponding reflections, to detect objects via radar frames which are unrealistically close, in particular closer than the minimum-possible-distance, because the (manipulated) reference clocks 115, 116 are used for both ranging and radar. For example, the UWB device may be located behind the bumper of a vehicle and therefore there may be a distance of 5 cm until there is a free space in which an object could be present. Accordingly, determination of a radar-based distance based on any one of the radar frames 301, 304, 307 (while the reference clock is maliciously manipulated) that is less than the minimum-possible-distance is unexpected (if not impossible) due to physical limitations of the space around the UWB device. If such a distance is determined by a calculation based on one or more of the radar frames and its reflection during the ranging round, then it may be determined that the apparatus 110 is under attack and the ranging-based distance cannot be verified as trustworthy and valid.

In a denial-of-service attack, the antenna of an UWB device may be enclosed in a Faraday cage, e.g. by wrapping it in aluminium foil. The comparison of the radar-based distance to the minimum-possible-distance may detect such an attack.

A predetermined maximum-possible distance may be predefined or set during a set-up procedure for each UWB device or, in particular, a predetermined radar configuration of the UWB device. More generally, the predetermined maximum-possible-distance may be based on a maximum radar operating distance which depends on the radar configuration (such as transmission power and frequency), that is the maximum range of an object from which a radar frame can still be reflected and be still successfully received by one or more UWB devices part of the same UWB ranging system which transmitted said radar frame. However, the user is free to set the predetermined maximum-possible-distance based on the application.

At any UWB device 111, 112, malicious manipulations of the reference clock 115, 116 may cause the UWB device 111, 112, based on the each of the radar frames and their corresponding reflections, to detect objects unrealistically far away, in particular further away than the maximum-possible-distance. The one or more UWB devices may be configured to limit a radar transmission of the one or more radar frames transmitted during the UWB ranging round relative to a transmission used for the UWB ranging round because they only need the radar frames to propagate and reflect at a similar distance. For example, the radar frames may be transmitted with a configuration for lower operating distances (e.g. with lower transmit power), as they only need to scan for something in the nearby proximity of the UWB ranging system (e.g., <1 m). Low signal power may also avoid interferences, reduce overall system energy consumption, and allow for better detection of manipulations. Thus, malicious clock frequency manipulations may lead to radar targets appearing at a distance at which the reflections should not be detected given the transmit configuration. If such a far-away distance is determined by a calculation based on one of the radar frames and its reflection during the ranging round, then it may be determined that the UWB secure ranging solution 100 is under attack and the ranging-based distance cannot be verified as trustworthy and valid.

Thus, to summarise, the one or more UWB devices 111, 112 are configured to independently verify their ranging-based distance by determining whether or not the one or more radar-based distances contravene one or both of a predetermined minimum-possible-distance or a predetermined maximum-possible distance associated with each specific UWB device. Those skilled in the art will recognize that the same checks can be performed or validated again also in a centralised manner by a single processor (e.g. a cloud server or a specific UWB device or a dedicated processor) after collecting and centralising all ranging- and radar-based distance from each UWB device. In particular, one UWB device might verify the ranging- and radar-based distances of another UWB device.

Thus, the one or more processors determine one or more radar-based distances from any one or more UWB devices to the remote UWB ranging system. The verification of the ranging-based distance is therefore based on whether any radar-based distance contravenes one or both of a first predetermined minimum-possible-distance or a first predetermined maximum-possible distance associated with the one or more UWB devices, in which case the ranging-based distance is not verified, otherwise it is verified.

It will be appreciated that a single radar-based distance contravening a predetermined minimum-possible-distance or maximum-possible-distance might be sufficient to deem the ranging-based distance as not-verified, however multiple radar-based distances and verifications based upon them are recommended to improve the overall method accuracy and to detect short clock manipulations. In some embodiments a single contravening radar-based distance might be enough to deem the ranging-based distance as not-verified, in other embodiments a certain amount larger than a predetermined threshold of contravening radar-based distances might be required instead.

The ranging-based distance determination may be used to control a lock on a vehicle or premises or to start the engine; or for the control of a home-automation system; or for the control of a vehicle-to-X system; or for the control or authorisation of a payment system. It will be appreciated that other examples of ranging-based distance activated functionality are within the scope of the disclosure.

The radar-based distance or distances may therefore be used to verify the trustworthiness of the determined ranging-based distance. Accordingly, based on the ranging-based distance being verified, the one or more UWB devices 111, 112 may cause the activation of the ranging-based distance activated functionality typically by a dedicated controller. Similarly, based on the ranging-based distance not being verified, the one or more UWB devices 111, 112 may prevent the ranging-based distance activated functionality from being activated typically by a dedicated controller.

In one or more examples, for UWB devices inside a vehicle, the transmitting configuration at the antenna may depend on the type of antenna (omnidirectional or directional), but may be defined such that the radiation pattern covers the respective reference clock 115, 116 in the PCB and the crystal oscillator pins of the UWB device with sufficient gain and resolution to mitigate against attack for each UWB device. In particular, the processor may be configured to detect objects (e.g. hands, attacking tools, moving objects) too close to the PCB on which the respective reference clock 115, 116 is based.

In the examples described above, the trustworthiness of the ranging-based distance is verified based on the radar-based distance or distances not being less than the minimum-possible-distance and/or greater than the maximum-possible-distance. In further examples, the determinations via UWB radar of the speed and/or acceleration of movement of the remote UWB device 121 may also be indicators of an attack.

The apparatus 110 may be configured for determination of at least two radar-based distances, which may be needed to determine the relative speed and/or relative acceleration of the remote apparatus with reference to the apparatus 110.

Thus, the one or more processors are configured to determine a relative speed of the remote UWB device 121 based on a change in two radar-based distances and a time between when those two radar-based distances were determined. Accordingly, the "radar-based" speed may be compared to a predetermined maximum-permissible-speed. If the "radar-based" speed is greater than the predetermined maximum-permissible-speed, the ranging-based distance is not verified. If the "radar-based" speed is less than the predetermined maximum-permissible-speed, the ranging-based distance is verified. The predetermined maximum-permissible-speed depends on the application. An example may be 13 m/s, which is an upper limit of Olympic sprinters; a lower value may be selected for an average user moving with a UWB-enabled smartphone.

In another example, the one or more UWB devices 111, 112 are configured to determine a relative acceleration of the remote UWB ranging system 120 based on multiple or at least three radar-based distances and times between when they were determined. For example, a first radar-based speed may be determined and a second radar based speed may be determined at a subsequent time, and the radar-based acceleration may be determined based on the change between the first and second radar-based speed over time.

Likewise, the verification of the ranging-based distance may thus be further based on the determined radar-based acceleration of the remote UWB device 121 relative to a predetermined maximum-permissible-acceleration. If the "radar-based" acceleration is greater than the predetermined maximum-permissible- acceleration, the ranging-based distance is not verified. If the "radar-based" acceleration is less than the predetermined maximum-permissible-acceleration, the ranging-based distance is verified. The predetermined maximum-permissible-acceleration depends on the application. An example may be 2.5 m/s², which is an upper limit of Olympic sprinters; a lower value may be selected for an average user moving with a UWB-enabled smartphone.

It will be appreciated that the one or more processors 113, 114 in any of the examples, may be configured to, by way of an output signal, that:
the ranging-based distance is verified;
the ranging-based distance is not verified;
the ranging-based distance is verified and the ranging-based distance is not verified, as appropriate; and
generate a warning that additional measures should be taken to determine the trustworthiness of the ranging-based distance.

Further, the selection of a number of radar-based distances, radar-based speeds and/or radar-based accelerations that may need to be "out-of-expected-range" for a verification/non-verification of the ranging-based distance may vary between embodiments.

The examples in this disclosure focus on using radar-based distances and measurements to verify ranging-based distances. It will be appreciated that the opposite is also possible, where ranging-based distances are used to verify radar-based distances and measurements.

Furthermore, the examples in this disclosure focus on the apparatus 110 performing the radar-based operations in order to verify the ranging-based distances. Those skilled in the art will recognise that the roles could also be inverted, as in the remote apparatus 120 could be performing radar-based operations in order to verify the ranging-based distances. Accordingly, both apparatuses 110, 120 may also independently perform the verification and may additionally cross-check each other's results if they match (within tolerance) to guarantee a higher degree of accuracy and trustworthiness of the result verification.

Further, other indicators of an attack may include the one or more processors 113, 114 being configured to verify the ranging-based distance based on one or more received reflections of the one or more radar frames relative to a predetermined maximum-expected-signal-configuration, such as signal power. Likewise, the one or more processors 113, 114 may be configured to verify the ranging-based distance is further based on a channel impulse response, CIR, determined from the received reflections of the one or more radar frames relative to a predetermined expected-CIR. For example, if the CIR indicates an environment with abnormally high and strong reflectivity, it might indicate that there is an ongoing attack, such as the device being enclosed in a Faraday cage or metal box.

For vehicle, IoT, and other applications leveraging on a plurality of UWB devices 111, 112, a detection of an out-of-expectation distance, speed, acceleration, CIR as described above may be configured to trigger a system response. For example, if one UWB device in an apparatus reports the proximity of somebody to the device itself as a potential attack, via any of the indicators described above, the apparatus may be configured to reduce any tolerances for error and/or check for consistent results over time and from all UWB devices comprising that UWB ranging system. For example, a first attack indication may be treated as a warning level to increase "attention to detail" to detect further anomalies. One UWB device might produce a false alarm, but any alarm might be enough to trigger a more thorough, higher-accuracy check of the entire set of UWB devices to detect otherwise unnoticeable attack-induced out-of-expectation values.

Figure 5 shows an example method of controlling an apparatus comprising at least one UWB device comprising a transmitter for transmitting ultra-wideband, UWB, frames and a receiver, the method comprising:
controlling 501 the transmitter and receiver of the at least one UWB device to perform a UWB ranging round with a remote UWB device, the UWB ranging round comprising the receipt of one or more ranging frames and the transmission of one or more responses;
determining 502 a ranging-based distance between the apparatus and the remote UWB device based on the UWB ranging round,
providing 503 for transmission of one or more radar frames during the UWB ranging round and,
determining 504 one or more radar-based distances between the at least one UWB device and the remote UWB device based on a corresponding one or more received reflections of the one or more radar frames,
verifying 505 the ranging-based distance by determining whether or not the one or more radar-based distances contravene one or both of a predetermined minimum-possible-distance or a predetermined maximum-possible-distance associated with the at least one UWB device.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. An apparatus comprising:
at least one ultra-wideband, UWB, device comprising a transmitter for transmitting ultra-wideband, UWB, frames and a receiver;
one or more processors configured to control the transmitter and receiver of the at least one UWB device to perform a UWB ranging round with a remote UWB device, the UWB ranging round comprising the receipt of one or more ranging frames and the transmission of one or more responses for determination of a ranging-based distance between the apparatus and the remote UWB device, wherein the one or more processors are further configured to provide for transmission of one or more radar frames during the UWB ranging round and, based on a corresponding one or more received reflections of the one or more radar frames, determine one or more radar-based distances between the at least one UWB device and the remote UWB device,
wherein the one or more processors are configured to verify the ranging-based distance by determining whether or not the one or more radar-based distances contravene one or both of a predetermined minimum-possible-distance or a predetermined maximum-possible-distance associated with the at least one UWB device.

2. The apparatus of claim 1, wherein the one or more processors are configured to:
based on the ranging-based distance being verified, activate ranging-based distance activated functionality; and
based on the ranging-based distance not being verified, prevent the ranging-based distance activated functionality from being activated.

3. The apparatus of any preceding claim, wherein:
(a) said one or more processors are configured to control the transmitter of the one or more UWB devices to provide for transmission of the one or more radar frames; or
(b) said one or more processors are configured to control the remote UWB device to provide for transmission of the one or more radar frames.

4. The apparatus of any preceding claim wherein the one or more UWB devices are configured to limit the transmission range of the one or more radar frames transmitted during the UWB ranging round relative to a transmission range used for the UWB ranging round.

5. The apparatus of any preceding claim, wherein the one or more processors are configured to control the transmitter and receiver of the at least one UWB device to perform the UWB ranging round with the remote UWB device, by
(a) in response to receipt of one or more ranging frames from the remote UWB device, provide for transmission by the transmitter of the at least one UWB device, to the remote UWB device, of the one or more responses for determination of the ranging-based distance between the apparatus and the remote UWB device; or
(b) provide for transmission of one or more ranging frames to the remote UWB device and provide for processing of the one or more responses from the remote UWB device for determination of the ranging-based distance between the apparatus and the remote UWB device.

6. The apparatus of any preceding claim, wherein the UWB ranging round comprises a plurality of ranging frames and the one or more UWB devices are configured to transmit the one or more radar frames in between at least two of the plurality ranging frames.

7. The apparatus of any preceding claim, wherein said one or more processors are configured such that each of the at least one UWB devices is configured to determine a respective ranging distance to the remote UWB device, and determine a respective radar-based distance, and wherein each of the at least one UWB devices are configured to verify their respective ranging-based distance by determining whether or not their one or more respective radar-based distances contravene one or both of the predetermined minimum-possible-distance or the predetermined maximum-possible-distance associated with the respective at least one UWB device.

8. The apparatus of any preceding claim, wherein the at least one UWB device comprises at least a first UWB device configured to be located at a first location and a second UWB device configured to be located at a different, second location, and
the one or more processors are configured to control the transmitter and receiver of the first and second UWB devices to each perform a UWB ranging round, the UWB ranging rounds comprising the receipt of one or more ranging frames from the remote UWB device and the transmission of one or more responses to the remote UWB device for determination of a respective ranging-based distance between the respective first and second UWB devices and the remote UWB device, wherein the one or more processors are further configured to control the transmitter of each of the first and second UWB devices to determine at least one or both of a first radar-based distance from the first UWB device to the remote UWB device and a second radar-based distance from the second UWB device to the remote UWB device,
wherein the one or more processors are configured to verify the respective ranging-based distances by determining whether or not one or both of:
the first radar-based distance contravenes one or both of a first predetermined minimum-possible-distance or a first predetermined maximum-possible distance associated with the first UWB device; or
the second radar-based distance contravenes one or both of a second predetermined minimum-possible-distance or a second predetermined maximum-possible distance associated with the second UWB device.

9. The apparatus of any preceding claim, wherein one or more of:
the radar frames are transmitted on a different channel to the ranging frames;
the radar frames are transmitted using a different antenna to the ranging frames;
the radar frames are transmitted using different codes to the ranging frames; or
the radar frames are transmitted using different guard time intervals to the ranging frames.

10. The apparatus of any preceding claim, wherein the determination of the one or more radar-based distance to the remote UWB device comprises the determination of at least two radar-based distances and wherein the one or more processors are configured to determine a speed of the remote UWB device based on a change in the at least two radar-based distances and a time between when the or each two radar-based distances were determined, and
wherein the one or more processors being configured to verify the ranging-based distance is further based on the determined speed of the remote UWB device relative to a predetermined maximum-permissible-speed.

11. The apparatus of any preceding claim, wherein the determination of the one or more radar-based distances to the remote UWB device comprises the determination of at least three radar-based distances and wherein the one or more processors are configured to determine an acceleration of the remote UWB device based on the at least three radar-based distances and times between when they were determined, and
wherein the one or more processors being configured to verify the ranging-based distance is further based on the determined acceleration of the remote UWB device relative to a predetermined maximum-permissible-acceleration.

12. The apparatus of any preceding claim, wherein the one or more processors being configured to verify the ranging-based distance is further based on a received power of the received reflections of the one or more radar frames relative to a predetermined maximum-expected-signal-power.

13. The apparatus of claim 12, wherein the one or more processors are configured to verify the radar-based distance based on a received power of the received reflections of the one or more radar frames relative to a predetermined maximum-expected-signal-power.

14. The apparatus of any preceding claim, wherein the one or more processors being configured to verify the ranging-based distance is further based on a channel impulse response, CIR, determined from the received reflections of the one or more radar frames relative to a predetermined expected-CIR.

15. A method of controlling an apparatus comprising at least one UWB device comprising a transmitter for transmitting ultra-wideband, UWB, frames and a receiver, the method comprising:
controlling the transmitter and receiver of the at least one UWB device to perform a UWB ranging round with a remote UWB device, the UWB ranging round comprising the receipt of one or more ranging frames and the transmission of one or more responses;
determining a ranging-based distance between the apparatus and the remote UWB device based on the UWB ranging round,
providing for transmission of one or more radar frames during the UWB ranging round and,
determining one or more radar-based distances between the at least one UWB device and the remote UWB device based on a corresponding one or more received reflections of the one or more radar frames,
verifying the ranging-based distance by determining whether or not the one or more radar-based distances contravene one or both of a predetermined minimum-possible-distance or a predetermined maximum-possible-distance associated with the at least one UWB device.

## Amended claims

### Amended claims in accordance with Rule 137(2) EPC.

1. An apparatus comprising:
at least one ultra-wideband, UWB, device (111, 112) comprising a transmitter for transmitting ultra-wideband, UWB, frames and a receiver;
one or more processors (113, 114) configured to control the transmitter and receiver of the at least one UWB device to perform a UWB ranging round with a remote UWB device (121), the UWB ranging round comprising the receipt of one or more ranging frames and the transmission of one or more responses for determination of a ranging-based distance between the apparatus and the remote UWB device, wherein the one or more processors are further configured to provide for transmission of one or more radar frames (301, 304, 307) during the UWB ranging round and, based on a corresponding one or more received reflections of the one or more radar frames, determine one or more radar-based distances between the at least one UWB device and an object assumed to comprise the remote UWB device,
wherein the one or more processors (113,114) are configured to verify the ranging-based distance by determining whether or not the one or more radar-based distances contravene one or both of a predetermined minimum-possible-distance or a predetermined maximum-possible-distance associated with the at least one UWB device.

2. The apparatus of claim 1, wherein the one or more processors (113,114) are configured to:
based on the ranging-based distance being verified, activate ranging-based distance activated functionality; and
based on the ranging-based distance not being verified, prevent the ranging-based distance activated functionality from being activated.

3. The apparatus of any preceding claim, wherein:
(a) said one or more processors (113,114) are configured to control the transmitter of the one or more UWB devices to provide for transmission of the one or more radar frames; or
(b) said one or more processors (113,114) are configured to control the remote UWB device to provide for transmission of the one or more radar frames.

4. The apparatus of any preceding claim wherein the one or more UWB devices are configured to limit the transmission range of the one or more radar frames transmitted during the UWB ranging round relative to a transmission range used for the UWB ranging round.

5. The apparatus of any preceding claim, wherein the one or more processors (113,114) are configured to control the transmitter and receiver of the at least one UWB device to perform the UWB ranging round with the remote UWB device (121), by
(a) in response to receipt of one or more ranging frames from the remote UWB device (121), provide for transmission by the transmitter of the at least one UWB device, to the remote UWB device, of the one or more responses for determination of the ranging-based distance between the apparatus and the remote UWB device; or
(b) provide for transmission of one or more ranging frames to the remote UWB device and provide for processing of the one or more responses from the remote UWB device for determination of the ranging-based distance between the apparatus and the remote UWB device.

6. The apparatus of any preceding claim, wherein the UWB ranging round comprises a plurality of ranging frames and the one or more UWB devices are configured to transmit the one or more radar frames in between at least two of the plurality ranging frames.

7. The apparatus of any preceding claim, wherein said one or more processors (113,114) are configured such that each of the at least one UWB devices is configured to determine a respective ranging distance to the remote UWB device, and determine a respective radar-based distance, and wherein each of the at least one UWB devices are configured to verify their respective ranging-based distance by determining whether or not their one or more respective radar-based distances contravene one or both of the predetermined minimum-possible-distance or the predetermined maximum-possible-distance associated with the respective at least one UWB device.

8. The apparatus of any preceding claim, wherein the at least one UWB device comprises at least a first UWB device (111) configured to be located at a first location and a second UWB device (112) configured to be located at a different, second location, and
the one or more processors (113,114) are configured to control the transmitter and receiver of the first and second UWB devices to each perform a UWB ranging round, the UWB ranging rounds comprising the receipt of one or more ranging frames from the remote UWB device (121) and the transmission of one or more responses to the remote UWB device for determination of a respective ranging-based distance between the respective first and second UWB devices and the remote UWB device, wherein the one or more processors are further configured to control the transmitter of each of the first and second UWB devices to determine at least one or both of a first radar-based distance from the first UWB device to the remote UWB device and a second radar-based distance from the second UWB device to the remote UWB device,
wherein the one or more processors (113,114) are configured to verify the respective ranging-based distances by determining whether or not one or both of:
the first radar-based distance contravenes one or both of a first predetermined minimum-possible-distance or a first predetermined maximum-possible distance associated with the first UWB device; or
the second radar-based distance contravenes one or both of a second predetermined minimum-possible-distance or a second predetermined maximum-possible distance associated with the second UWB device.

9. The apparatus of any preceding claim, wherein one or more of:
the radar frames are transmitted on a different channel to the ranging frames;
the radar frames are transmitted using a different antenna to the ranging frames;
the radar frames are transmitted using different codes to the ranging frames; or
the radar frames are transmitted using different guard time intervals to the ranging frames.

10. The apparatus of any preceding claim, wherein the determination of the one or more radar-based distance to the remote UWB device comprises the determination of at least two radar-based distances and wherein the one or more processors are configured to determine a speed of the remote UWB device based on a change in the at least two radar-based distances and a time between when the or each two radar-based distances were determined, and
wherein the one or more processors (113,114) being configured to verify the ranging-based distance is further based on the determined speed of the remote UWB device relative to a predetermined maximum-permissible-speed.

11. The apparatus of any preceding claim, wherein the determination of the one or more radar-based distances to the remote UWB device comprises the determination of at least three radar-based distances and wherein the one or more processors are configured to determine an acceleration of the remote UWB device based on the at least three radar-based distances and times between when they were determined, and
wherein the one or more processors (113,114) being configured to verify the ranging-based distance is further based on the determined acceleration of the remote UWB device relative to a predetermined maximum-permissible-acceleration.

12. The apparatus of any preceding claim, wherein the one or more processors (113,114) being configured to verify the ranging-based distance is further based on a received power of the received reflections of the one or more radar frames relative to a predetermined maximum-expected-signal-power.

13. The apparatus of claim 12, wherein the one or more processors (113,114) are configured to verify the radar-based distance based on a received power of the received reflections of the one or more radar frames relative to a predetermined maximum-expected-signal-power.

14. The apparatus of any preceding claim, wherein the one or more processors (113,114) being configured to verify the ranging-based distance is further based on a channel impulse response, CIR, determined from the received reflections of the one or more radar frames relative to a predetermined expected-CIR.

15. A method of controlling an apparatus comprising at least one UWB device (111, 112) comprising a transmitter for transmitting ultra-wideband, UWB, frames and a receiver, the method comprising:
controlling the transmitter and receiver of the at least one UWB device to perform a UWB ranging round with a remote UWB device (121), the UWB ranging round comprising the receipt of one or more ranging frames and the transmission of one or more responses;
determining a ranging-based distance between the apparatus and the remote UWB device based on the UWB ranging round,
providing for transmission of one or more radar frames during the UWB ranging round and,
determining one or more radar-based distances between the at least one UWB device and an object assumed to comprise the remote UWB device based on a corresponding one or more received reflections of the one or more radar frames,
verifying the ranging-based distance by determining whether or not the one or more radar-based distances contravene one or both of a predetermined minimum-possible-distance or a predetermined maximum-possible-distance associated with the at least one UWB device.
